# FASCICULE DE BREVET EUROPEEN

(11) **EP 0 392 243 B1**
(45) Date de publication et mention de la délivrance du brevet: **08.06.1994**
(21) Numéro de dépôt: 90105682.0
(22) Date de dépôt: 26.03.1990
(51) Int. Cl.: H02K 3/24, H02K 9/00

(54) **Dispositif de refroidissement de barres d'enroulements statoriques de machines éléctriques**
Vorrichtung zur Kühlung von Ständerwicklungsstäben elektrischer Maschinen
Cooling device for stator winding bars of electrical machines

(30) Priorité: 31.03.1989 FR 8904252
(43) Date de publication de la demande: 17.10.1990
(73) Titulaire: GEC ALSTHOM SA, 75116 Paris (FR)
(72) Inventeur: Guyot, Jean, F-90150 Fontaine (FR); Ruelle, Gilbert, F-90000 Belfort (FR); Seintourens, Jean-Marie, F-90000 Belfort (FR)
(74) Mandataire: Weinmiller, Jürgen

(56) Documents cités:
- EP-A- 0 172 397
- CH-A- 410 145
- DE-C- 1 104 049
- US-A- 2 664 512

## Description

La présente invention concerne un dispositif de refroidissement de barres d'enroulements statoriques de machines électriques, notamment de turboalternateurs, comprenant des tubes métalliques longitudinaux disposés à l'intérieur de barres Roebel, ou entre des barres Roebel, alimentés à une extrémité en un gaz de refroidissement.

On connaît des dispositifs de refroidissement de telles barres, constitués par des tubes métalliques disposés à l'intérieur des barres, ou entre deux barres, reliés à une extrémité à une alimentation en gaz de refroidissement, air ou un autre gaz, et à l'autre extrémité à une évacuation de ce gaz de refroidissement. Celui-ci chemine donc à l'intérieur du tube d'une extrémité à l'autre. Ces tubes ont la longueur totale des barres Roebel, y compris les développantes.

Compte tenu des pertes de charge linéaires dans les tubes, le gaz de refroidissement doit y être refoulé sous une pression assez élevée, ce qui nécessite plusieurs étages de compression. Ceci complique l'appareillage de ventilation pour le refroidissement des barres.

Le document EP-A-0 172 397 de l'état de la technique décrit un système de refroidissement indirect conforme au préambule de la revendication 1. Ce document US-A-2 664 512 décrit un autre dispositif de refroidissement comprenant des orifices de sortie de l'élément de refroidissement.

La présente invention a pour but d'assurer un bon refroidissement des barres d'enroulements statoriques, sans cependant nécessiter l'emploi de ventilateurs à plusieurs étages.

La présente invention a pour objet un dispositif de refroidissement de barres d'enroulement statorique tel que défini à la revendication 1.

De plus, l'invention comporte de préférence au moins l'une des caractéristiques suivantes :
- Les tubes métalliques sont coupés à une certaine distance de part et d'autre de l'ouverture, ou des ouvertures, de sortie ou d'entrée du gaz de refroidissement, et il est disposé entre les tronçons de tubes, de chaque côté de l'ouverture, ou des ouvertures, des plaques et des tôles de section droite en forme de U en matière électriquement isolante, les tôles en forme de U étant munies de bossages de maintien de leur écartement.
- Les tubes métalliques sont disposés sur les flancs des barres Roebel ou aux extrémités radiales de celle-ci.
Il est décrit ci-après, à titre d'exemples et en référence aux figures schématiques du dessin annexé, un dispositif de refroidissement connu (figure 1) et des dispositifs de refroidissement de turboalternateurs selon l'invention (figures 2 à 9).
- La figure 1 selon l'art antérieur représente des tubes de refroidissement disposés au milieu d'une barre Roebel ;
- La figure 2 représente un tube de refroidissement de l'invention et ses entrées et sorties de gaz de refroidissement ;
- La figure 3 représente deux barres avec tubes de refroidissement montés côte à côte et le circuit magnétique voisin ;
- La figure 4 représente des tubes de refroidissement sur les flancs des barres Roebel correspondantes ;
- La figure 5 représente des tubes de refroidissement disposés aux extrémités radiales des barres Roebel ;
- La figure 6 représente un orifice d'évacuation de gaz de refroidissement ;
- La figure 7 est une coupe selon l'axe VII-VII de la figure 6 ;
- La figure 8 est une coupe selon l'axe VIII-VIII de la figure 6 ;
- La figure 9 représente une tôle en forme de U en matière isolante assurant la constitution de la ligne de fuite sur un canal d'entrée ou de sortie du gaz de refroidissement.

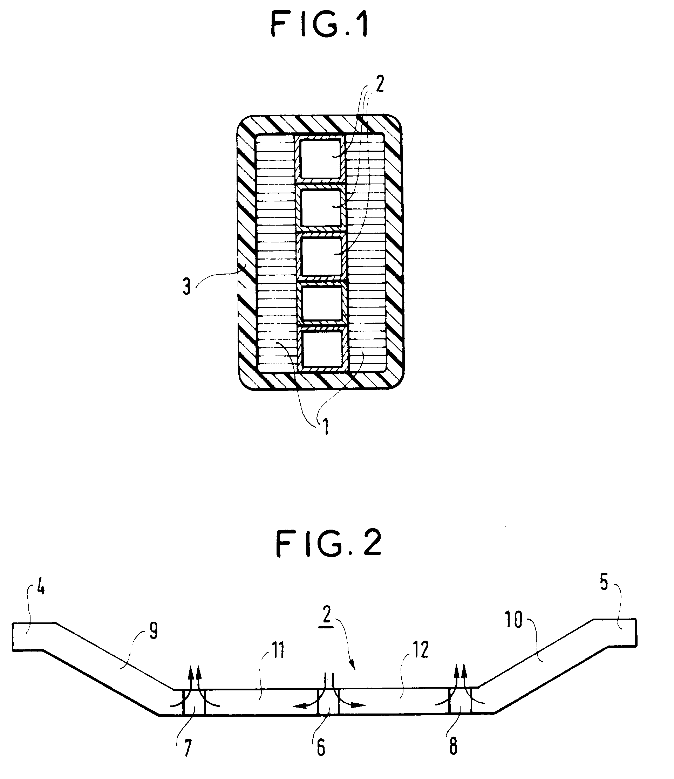

Dans la figure 1, les tubes de refroidissement 2, de section droite carrée ou rectangulaire, sont disposés au milieu d'une barre Roebel 1, entourée d'une isolation 3. Les tubes 2 sont isolés entre eux et par rapport au cuivre de la barre. Ils sont mis au potentiel du cuivre au niveau d'une des têtes de bobine, de la façon habituelle. Ces tubes sont d'une seule pièce, de la longueur totale de la barre, y compris ses développantes. L'air ou tout autre gaz de refroidissement pénétre à une extrémité de la barre au niveau de la tête de bobine, chemine dans les tubes, puis ressort à l'autre extrémité de la barre. Compte tenu des pertes de charge linéaires dans les tubes, ce refroidissement nécessite l'usage d'un gaz sous pression et l'emploi de ventilateurs le portant à une pression élevée, généralement en plusieurs étages.

La figure 2 représente un tube de refroidissement d'un dispositif selon l'invention. Ce tube est coupé en quatre tronçons 9, 11, 12, 10, séparés par trois intervalles d'introduction ou d'évacuation de gaz de refroidissement 6, 7, 8.

Le gaz de refroidissement est introduit par les extrémités 4 et 5 du tube et par l'intervalle médian 6, et évacué par les intervalles 7, 8, comme représenté par les flèches.

La perte de charge entre une entrée et une sortie étant ainsi réduite, on peut utiliser un gaz de refroidissement non comprimé, refoulé par des ventilateurs de type courant.

Au lieu de couper le tube en tronçons séparés par des intervalles, on peut utiliser des tubes continus, munis d'ouvertures en des points d'introduction et d'évacuation. Le nombre de tronçons de tubes ou d'ouvertures dans un tube unique peut être adapté à la longueur des barres.

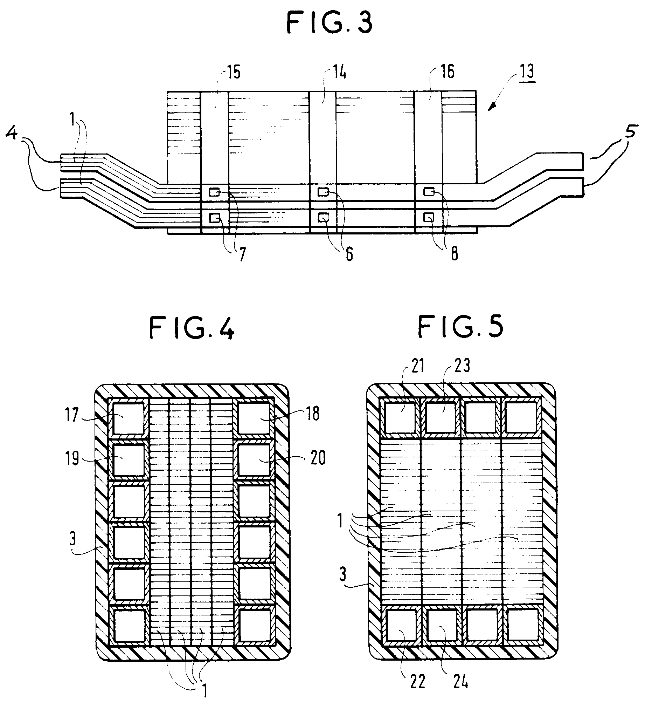

La figure 3 représente en coupe axiale deux barres équipées de tubes de refroidissement adjacents, munis d'ouvertures d'entrée de gaz de refroidissement 4, 5 à leurs extrémités et 6 en leur milieu, et d'ouvertures d'évacuation de ce gaz 7, 8, ces ouvertures débouchant dans des canaux de passage 14, 15, 16 à travers le circuit magnétique 13 vers l'extérieur du circuit magnétique.

La figure 4 représente une variante selon laquelle les tubes de refroidissement tels que 17, 18, 19, 20, divisés en tronçons ou percés d'ouvertures d'entrée ou de sortie de gaz, sont disposés sur les flancs d'une barre 1, à l'intérieur d'une isolation 3.

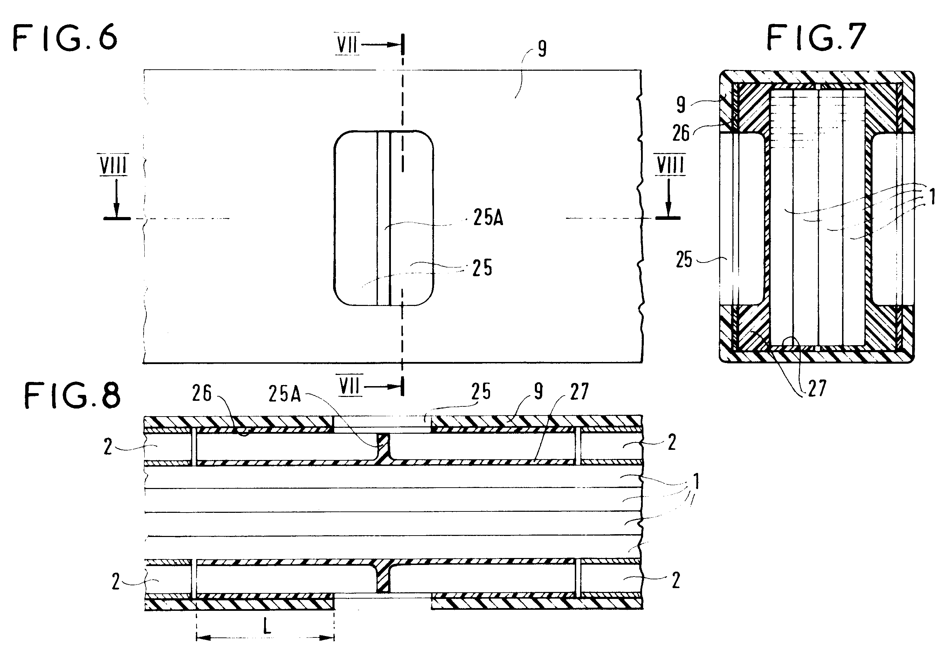

Selon une autre variante, représentée en figure 5, les tubes 21, 22, 23, 24 sont disposés aux extrémités radiales d'une barre 1.

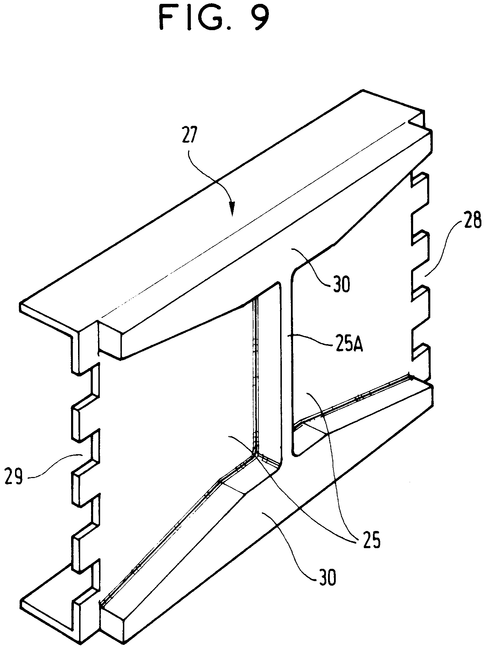

Au lieu de couper les tubes au droit des caneaux d'introduction ou d'évacuation du gaz de refroidissement, on peut, pour diminuer la largeur des évents d'entrée et de sortie de gaz à l'intérieur du circuit magnétique, constituer des lignes de fuite au niveau de ces entrées et sorties, comme représenté dans les figures 6 à 9. La figure 6 représente en développée une ouverture 25 d'entrée ou de sortie de gaz, séparée en deux par une cloison 25A. Les tronçons de tube 2 sont coupés à une certaine distance de l'ouverture 25, à une distance L du bord de l'ouverture, dite ligne de fuite. Il est disposé dans l'intervalle les séparant des pièces en U en matière électriquement isolante 27, et en face de celles-ci des plaques 26 également en matière isolante. Les pièces en U sont munies de bossages tels que 30 pour maintenir l'écartement entre elles, et de bords latéraux crantés 28, 29 pour leur jonction avec les extrémités des tronçons de tube 2.

## Revendications

1. Dispositif de refroidissement de barres (1) Roebel d'enroulement statorique de machines électriques, notamment de turboalternateurs, comprenant des tubes métalliques longitudinaux (2) alimentés en gaz de refroidissement ;
lesdits tubes étant de longueur égale à la longueur totale de chacune desdites barres (1) y compris leurs développantes ; caractérisé en ce que
- lesdits tubes sont alimentés à leurs deux extrémités (4, 5) par ledit gaz de refroidissement ;
- lesdits tubes se composent d'au moins quatre tronçons (9, 10, 11, 12), délimités par au moins trois ouvertures (6, 7, 8), l'ouverture médiane (6) étant une ouverture d'entrée dudit gaz de refroidissement, les deux autres ouvertures (7, 8), disposées chacune entre une extrémité (4, 5) et l'ouverture médiane (6), étant des ouvertures de sortie dudit gaz de refroidissement.

2. Dispositif de refroidissement selon la revendication 1, caractérisé en ce que les tubes métalliques (2) sont coupés à une certaine distance de part et d'autre de l'ouverture (25), ou des ouvertures, de sortie ou d'entrée du gaz de refroidissement, et en ce qu'il est disposé entre les tronçons de tubes, de chaque côté de l'ouverture, ou des ouvertures, des plaques (26) et des tôles de section droite en forme de U (27) en matière électriquement isolante, ces dernières étant munies de bossages (30) de maintien de leur écartement.

3. Dispositif selon l'une des revendications 1 à 2, caractérisé en ce que les tubes métalliques longitudinaux (17, 18, 19, 20 ; 21, 22, 23, 24) sont disposés sur les flancs des barres Roebel ou aux extrémités radiales de celles-ci.

## Claims

1. A cooling device for transposed conductor stator winding bars (1) of electric machines, comprising longitudinal metal tubes (2) fed with cooling gas; the said tubes being of length equal to the total length of each of the said bars (1) including their end windings; characterized in that
- the said tubes are fed at both their ends (4, 5) with the said cooling gas;
- the said tubes are formed of at least four sections (9, 10, 11, 12) delimited by at least three openings (6, 7, 8), the central opening (6) being an inlet opening for the said cooling gas, the other two openings (7, 8) each being disposed between one end (4, 5) and the central opening (6) and being outlet openings for the said cooling gas.

2. A cooling device according to claim 1, characterized in that the said metal tubes (2) are cut short some distance to either side of the inlet or outlet opening (25) or openings for the cooling gas, and in that panels (26) and plates of U-shaped cross-section (27) of electrically insulating material are disposed in between the tube sections, on each side of the opening or openings, the latter being provided with protuberances (30) to maintain their spacing.

3. A cooling device according to claim 1 or 2, characterized in that the longitudinal metal tubes (17, 18, 19, 20; 21, 22, 23, 24) are disposed on the sides of the transposed conductor bars or on the radial faces thereof.

## Patentansprüche

1. Einrichtung zum Kühlen von Röbel-Stäben (1) der Ständerwicklung elektrischer Maschinen, insbesondere Turbogeneratoren, die längliche Metallrohre (2) aufweist, die mit Kühlgas gespeist werden,
wobei die Rohre eine Länge besitzen, die der Gesamtlänge jedes der Stäbe (1) einschließlich seiner Stirnverbindungen entspricht, dadurch gekennzeichnet, daß
- die Rohre an ihren beiden Enden (4, 5) mit dem Kühlgas gespeist werden,
- die Rohre aus mindestens vier Längen (9, 10, 11, 12) bestehen, die durch mindestens drei Öffnungen (6, 7, 8) begrenzt sind, wobei die mittlere Öffnung (6) eine Eingangsöffnung für das Kühlgas ist, während die beiden anderen Öffnungen (7, 8), die jeweils zwischen einem Ende (4, 5) und der mittleren Öffnung (6) angeordnet sind, Auslaßöffnungen für das Kühlgas sind.

2. Kühlvorrichtung nach Anspruch 1, dadurch gekennzeichnet, daß die Metallrohre (2) in einem bestimmten Abstand zu beiden Seiten der Ausgangs- oder Eingangsöffnung(en) (25) für das Kühlgas abgeschnitten sind und daß zwischen die Rohrlängen zu beiden Seiten der Öffnung(en) Platten (26) und Tafeln U-förmigen Querschnitts (27) aus elektrisch isolierendem Material angeordnet sind, wobei letztere mit Höckern (30) zur Einhaltung ihres Abstands versehen sind.

3. Vorrichtung nach einem der Ansprüche 1 bis 2, dadurch gekennzeichnet, daß die länglichen Metallrohre (17, 18, 19, 20; 21, 22, 23, 24) an den Flanken der Röbel-Stäbe oder an deren radialen Enden angeordnet sind.
